# EUROPÄISCHE PATENTSCHRIFT

(11) **EP 0 475 166 B1**
(45) Veröffentlichungstag und Bekanntmachung des Hinweises auf die Patenterteilung: **17.11.1994**
(21) Anmeldenummer: 91114207.3
(22) Anmeldetag: 24.08.1991
(51) Int. Cl.: C04B 24/12, C08K 7/04, C08K 5/17, C08L 33/12, C04B 26/06

(54) **Leichtbauplatten**
Light-weight building panels
Eléments de construction légers

(30) Priorität: 13.09.1990 DE 4029095
(43) Veröffentlichungstag der Anmeldung: 18.03.1992
(73) Patentinhaber: BASF Aktiengesellschaft, 67063 Ludwigshafen (DE)
(72) Erfinder: Dotzauer, Bernhard, Dr., W-6701 Maxdorf (DE); Portugall, Michael, Dr., W-6706 Wachenheim (DE); Beckerle, Wilhelm Friedrich, W-6712 Bobenheim-Roxheim (DE); Denu, Hans-Juergen, W-6840 Lampertheim (DE)

(56) Entgegenhaltungen:
- EP-A- 0 123 234
- EP-A- 0 178 612
- EP-A- 0 286 008
- EP-A- 0 386 579

## Beschreibung

Die vorliegende Erfindung betrifft Leichtbauplatten auf der Basis von Mineralfasern A mit thermoplastischen Bindemitteln, die bezüglich A einen Gehalt von
1 bis 25 Gew.-% eines Copolymeren B mit einer Glasübergangstemperatur von 70 bis 105°C, aufgebaut im wesentlichen aus
50 bis 98 Gew.-% Methylmethacrylat I,
2 bis 50 Gew.-% eines oder mehrerer Acrylsäureester II von C₁-C₈-Alkanolen und
0 bis 2,5 Gew.-% eines oder mehrerer vernetzender Monomere III
als Bindemittel,
0 bis 150 Gew.-% an Füllstoffen C,
und, bezogen auf B,
0,2 bis 15 Gew.-% eines oder mehrerer Amine F der allgemeinen Formel 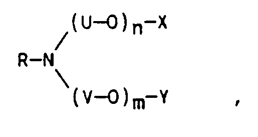
in der
R für C₈-C₁₈-Alkyl oder C₈-C₁₈-Alkenyl,
U und V für C₂-C₄-Alkylen,
X und Y für Wasserstoff, C₁-C₁₈-Alkyl oder C₂-C₁₈-Alkenyl und
n und m für ganze Zahlen von 0 bis 10 stehen,
oder deren Säureadditionssalze aufweisen.

In der Praxis werden im großen Ausmaß Leichtbauplatten z.B. zur Schalldämpfung auf Basis von Mineralfasern, Bindemitteln und zusätzlich meist Füllstoffen, Brandschutzmitteln und Hydrophobierungsmitteln hergestellt. Als Bindemittel dient dabei vorwiegend Stärke, die in Mengen von bis zu etwa 15 %, bezogen auf die Mineralfasern, eingesetzt wird. Als Füllstoffe werden meist feinteilige Tone, z.B. Kaolin verwendet, und als Mineralfasern dienen Steinwolle und/oder Glasfasern, die meist Längen von 5 bis 50 mm und eine Dicke von etwa 1,7 bis 3,3 dtex haben. Der Anteil an Füllstoffen kann dabei in weiten Grenzen variiert werden und liegt häufig im Bereich von 10 bis 30 Gew.-%, bezogen auf die Mineralfasern. Schalldämmplatten dieser Art weisen meist eine Dicke von 1 bis 3 cm auf. Ein Nachteil dieser bekannten Leichtbauplatten ist ihre Feuchtigkeitsempfindlichkeit, die meist dazu zwingt, die Rückseiten der Platten beispielsweise mit Duroplasten wie wäßrigen Melamin/Formaldehyd-Harzen zu beschichten bzw. zu imprägnieren, wodurch eine weitere Trocknung erforderlich wird. Die Herstellung derartiger Platten ist schon aus diesem Grund verhältnismäßig energieaufwendig. Weiterhin führt die Stärke durch Migration zu einer Verfärbung von Dekorbeschichtungen, die üblicherweise auf der Vorderseite der Platten aufgebracht werden.

Nach der US-A 3 779 862 werden flexible Mineralfaser-Platten hergestellt, indem man bei der Herstellung der wäßrigen Aufschlämmung der Mineralfasern eine wäßrige Dispersion eines anionischen, selbstvernetzenden Polyacrylats sowie eine Aluminiumhydroxid-Suspension und einen synthetischen anionischen Polyelektrolyten zusetzt, wonach die Platten unter Entwässerung gebildet werden. Bei diesem etwas umständlichen Verfahren erhält man jedoch Platten, die weder selbsttragend noch feuchtigkeitsfest sind.

Schließlich ist es aus der DE-A 25 45 728 bekannt, Dämmplatten herzustellen, indem man Perlit und Steinwolle mit einer Polymerdispersion auf Basis eines Copolymerisates aus Butylacrylat, Acrylnitril und Acrylsäure unter Zusatz eines Faseraufschlußmittels auf Basis einer wäßrigen Lösung eines carboxylgruppenhaltigen Polyacrylesters bindet. Dabei erhält man Dämmplatten, die zwar eine sehr gute Wärmedämmung ergeben, deren Druckfestigkeit und Biegezugfestigkeit jedoch zu wünschen übrig lassen.

Wie die EP-A 0 123 234 sowie die DE-A 36 03 433 ausführen, kann man Mineralfaserplatten mit Methylmethacrylat-Copolymer`saten als Bindemittel herstellen, wobei die Polymerisate Glasübergangstemperaturen von 30 bis 80 bzw. 60 bis 110°C aufweisen. Nach diesem Verfahren werden Mineralfasern, mineralische Zuschlagstoffe und anionische Polymerdispersionen in Wasser verteilt und das Bindemittel durch Zugabe von anorganischen Salzen wie beispielsweise Aluminiumsulfat oder auch mit kationischen Polymerdispersionen gefällt. Der geflockte Niederschlag wird auf einem Langsieb entwässert. Die so erhaltenen feuchten Rohplatten trocknet man bei erhöhter Temperatur. Auf diese Weise kann man Platten herstellen, die unter feuchten Bedingungen besonders stabil sind.

Das zumeist verwendete Fällungsmittel Aluminiumsulfat reagiert jedoch infolge Hydrolyse sauer, weshalb der pH-Wert des Filtrates, das zur Wiederverwendung rückgeführt wird, von ursprünglich etwa 8 allmählich in Bereiche von bis zu ca. 3 bis 4 absinkt. Dies wirkt sich ungünstig auf die mechanischen Eigenschaften der Mineralfasern aus, die bereits ab pH-Werten von 5 geschädigt werden können. Der pH-Wert der Reaktionsmischung beeinflußt während der Fällung die mechanischen Eigenschaften der fertigen Mineralfaserplatten auch über die Flockengestalt des Bindemittels. Im pH-Bereich von etwa 8 bis 9 werden Flocken erhalten, die sehr gute Bindeeigenschaften besitzen. Mit sinkendem pH-Wert verändern sich Gestalt und Größe der Bindemittelflocken und damit deren Bindeeigenschaften.

Natürlich kann man durch Zugabe von Alkalien den pH-Wert des Dispersionsmittels wieder in den optimalen Bereich anheben, die Folgen sind jedoch erhöhter Salzgehalt des Filtrates und Platten mit schlechter Formstabilität in feucht-warmer Atmosphäre.

Der Einsatz von Ionentauschern ist verfahrenstechnisch zwar möglich, aber aus ökonomischen Gründen nicht sinnvoll.

Auch die kationischen Polymerdispersionen als Fällungsmittel für die anionischen Polymerdispersionen haben in der Praxis Nachteile. Abgesehen von einer doppelten Lagerhaltung ist eine exakte Dosierung bei der Herstellung der Platten nur sehr schwer zu erzielen. Ein über- oder Unterschuß an kationischer Dispersion kann später das Ankleben der trocknenden Rohplatten auf den stählernen Unterlagen verursachen.

Der Erfindung lag daher die Aufgabe zugrunde, Mineralfaserplatten zu entwickeln, die unter Tropenbedingungen hohe Formstabilität besitzen und sich besser herstellen lassen.

Demgemäß wurden die eingangs beschriebenen Leichtbauplatten und ein Verfahren zu deren Herstellung gefunden.

Die Leichtbauplatten enthalten die hierfür üblichen geeigneten Mineralfasern A, wie beispielsweise Steinwolle, Basaltwolle und Glasfasern mit Faserlängen von meist 0,2 bis 8, bevorzugt von 0,5 bis 5 cm, und Dicken von etwa 1 bis 5, besonders bevorzugt von 1,5 bis 3,5 dtex. Derartige Mineralfasern können bei der Herstellung der Platten in geschlichtetem, d.h. oberflächenbeschichtetem, Zustand eingesetzt werden. Als Schlichtemittel für derartige Mineralfasern werden üblicherweise Mineralöle, synthetische Polymere, wie vorzugsweise Polyacrylat-Dispersionen, sowie Polyacrylsäuren verwendet.

Als thermoplastisches Bindemittel verwendet man Copolymere B, deren Glasübergangstemperatur zwischen 70 und 105°C, vorzugsweise zwischen 80 und 100°C, liegt. Sie sind, bezogen auf A, zu 1 bis 25 Gew.-%, vorzugsweise 3 bis 15 Gew.-% und insbesondere zu 6 bis 10 Gew.-% in den Leichtbauplatten enthalten.

Das Copolymere B besteht zu 50 bis 98 Gew.-%, bevorzugt 75 bis 95 Gew.-%, aus Methylmethacrylat 1 und zu 2 bis 50 Gew.-%, bevorzugt zu 5 bis 25 Gew.-% aus Acrylsäureestern II von C₁-C₈-Alkoholen, wie Methyl-, n-Butyl-, i-Butyl-, Octyl- und Ethylhexylacrylat.

In manchen Fällen ist es von Vorteil, vernetzende Monomere III in kleinen Mengen, vorzugsweise 0,5 bis 2,5 Gew.-%, wie 1,4-Dimethacryloyloxybutan und Divinylbenzol einzupolymerisieren.

Im allgemeinen werden die Polymerisate B bei der Herstellung der Leichtbauplatten in Form ihrer wäßrigen kationischen Dispersionen eingesetzt, die man durch Emulsionspolymerisation unter Verwendung von, bezogen auf die Dispersion, 0,1 bis 4, vorzugsweise 0,2 bis 2 Gew.-% wasserlöslicher Ammoniumsalze von Aminen F mit organischen oder anorganischen Säuren als Emulgator herstellt. Amine F sind langkettige Amine mit 8 bis 18 C-Atomen im Kohlenwasserstoffrest, die am Stickstoffatom ein oder zwei weitere Reste tragen können. Als solche Reste kommen neben C₁-C₁₈-Alkyl- und C₂-C₁₈-Alkenylgruppen noch Polyalkylenoxidreste in Betracht, die aus bis zu 10 C₂-C₄-Alkylenoxideinheiten bestehen und terminal Wasserstoff, C₁-C₁₈-Alkyl- oder C₂-C₁₈-Alkenylgruppen tragen. Beispiele hierfür sind: Laurylamin, Dimethyloleylamin und das Umsetzungsprodukt von 1 Mol Stearylamin mit 10 Mol Ethylenoxid. Zur Ammoniumsalzbildung dienen beispielsweise anorganische Säuren wie Chlor- und Bromwasserstoffsäuren, Schwefelsäure und Phosphorsäure und organische Säuren wie Ameisensäure, Essigsäure und Glykolsäure.

Die Amine F oder ihre Säureadditionssalze sind in den erfindungsgemäßen Leichtbauplatten bezogen auf das Bindemittel B zu 0,2 bis 15 Gew.-%, vorzugsweise zu 0,5 bis 8 Gew.-%, insbesondere zu 0,8 bis 4 Gew.-% enthalten.

Derartige kationische Polymerdispersionen sind im Handel erhältlich, sind vorzugsweise feindispers und weisen im allgemeinen einen Restmonomerengehalt von weniger als 200 ppm, vorzugsweise weniger als 100 ppm, und pH-Werte von etwa 2 bis 6, bevorzugt von 3 bis 5, auf. Sie haben einen Feststoffgehalt von vorzugsweise 30 bis 60, besonders bevorzugt von 40 bis 55 Gew.-%.

Als Füllstoffe C kann man feinteilige Tone, beispielsweise Blähtone, Kaolin und Montmorillonit, Feldspat, Kreide, Kieselgur und Glimmer oder andere organische oder anorganische Leichtfüllstoffe verwenden. Ihr Anteil kann, bezogen auf A, bis zu 150 Gew.-% betragen. Bevorzugt werden 20 bis 100 Gew.-%, insbesondere 40 bis 60 Gew.-%.

Zusätzlich können die Leichtbauplatten, die im allgemeinen ein sehr günstiges Brandverhalten aufweisen, bezogen auf die Mineralfasern, noch bis zu 10, vorzugsweise 1 bis 3 Gew.-% üblicher Brandschutzmittel D, wie beispielsweise Aluminiumsilikate und -hydroxide und/oder Phosphate, wie prim. Natriumphosphat enthalten.

Schließlich kann es bei der Herstellung der Leichtbauplatten in manchen Fällen von Vorteil sein, noch bis zu 5 Gew.-%, bezogen auf die Mineralfasern an zusätzlichen Hydrophobierungsmitteln E wie Silikone (Polysiloxane) und Wachse zuzufügen.

Die neuen Leichtbauplatten können auf ihrer Sichtfläche z.B. mit den üblichen Schall-absorbierenden Strukturen versehen und in an sich üblicher Weise beschichtet sein. Hierfür geeignete Beschichtungsmassen auf der Basis von wäßrigen Polymerdispersionen sind im Handel erhältlich und können in üblicher Weise gefärbt sein.

Die erfindungsgemäßen Leichtbauplatten sind nach dem erfindungsgemäßen Verfahren wie folgt erhältlich:
Die Mineralfasern A werden ggf. zusammen mit den Zusatzstoffen C, D und E in Wasser suspendiert. Anschließend wird unter Rühren eine wäßrige Dispersion des Copolymeren B, die auch die Säureadditionssalze der Amine F enthält, zugesetzt. Durch Zugabe eines Fällungsmittels G wird dann das Bindemittel auf den Fasern niedergeschlagen. Die Platten werden durch Abtrennung der wäßrigen Phase unter Blattbildung nach den üblichen Methoden wie beispielsweise mittels Sieben erhalten. Das Trocknen erfolgt anschließend an die Blattbildung bei Temperaturen von im allgemeinen 110 bis 220, vorzugsweise von 140 bis 180°C unter Einsatz von Wärmequellen wie Infrarotstrahlern, Heißluft und Mikrowellen.

Als Fällungsmittel G dienen anorganische, ionische Basen wie die Borate, Carbonate, Hydrogencarbonate und die Hydroxide der Alkali- und Erdalkalimetalle, wie etwa Calciumhydroxid. Bevorzugt wird Borax verwendet, das Bindemittelflocken mit sehr gutem Bindeverhalten liefert. Die so hergestellten Platten enthalten Restmengen von Borax, die das ohnehin sehr günstige Brandverhalten der Platten (Brandklasse A2, DIN 4102) noch verbessern.

Die Verwendung von handelsüblichen Flockungsmitteln, wie Polyacrylamid, zur Flockung feinteiliger Anteile der anorganischen Zuschlagstoffe ist oft vorteilhaft, weil man dadurch zu klareren Filtraten gelangt.

Die fertig getrockneten Platten haben im allgemeinen eine Dicke von 0,5 bis 10, vorzugsweise von 1 bis 5, besonders bevorzugt von 1 bis 2 cm.

Überraschenderweise entfalten die kationischen Polymerdispersionen ein höheres Bindevermögen als anionische, d.h. man erzielt mit niedrigeren Bindemittelkonzentrationen vergleichbar hohe Steifigkeiten (Formstabilität der Platten).

Die neuen Leichtbauplatten zeichnen sich durch eine geringe Wasseraufnahme und nach entsprechender Oberflächenbehandlung durch ein hervorragendes Schalldämmverhalten aus, sind steif und biegen weder in feuchtwarmer Atmosphäre noch in nassem Zustand durch. Sie sind schwer entflammbar und geben einmal aufgenommenes Wasser ohne Verlust ihrer funktionellen Eigenschaften besonders leicht wieder ab. Die neuen Leichtbauplatten können gemäß dem neuen Herstellungsverfahren in besonders energiesparender Weise hergestellt werden, da beim Trocknen das Wasser durch Verdampfen wesentlich leichter aus den verfestigten Platten abgeführt werden kann, als wenn als Bindemittel Stärke eingesetzt wird. Von Vorteil ist weiterhin, daß das bei der Herstellung anfallende Abwasser praktisch nicht durch Schadstoffe belastet ist. Die Platten sind mechanisch leicht bearbeitbar und verrottungsbeständig.

### Beispiele

Die in den folgenden Beispielen verwendete Mineralwolle besteht aus Fasern einer durchschnittlichen Länge von 3 cm und eines Durchmessers von unter 3,3 dtex.

### A. Herstellung der Leichtbauplatten

### Beispiel 1

Eine Mischung aus
7000 g Wasser
240 g Mineralwolle und
115 g Kaolin
wurde unter starken Rühren mit
58 g einer 40 gew.-%igen Dispersion
eines Polymeren aus
80 Gew.-% Methylmethacrylat,
10 Gew.-% Methylacrylat,
10 Gew.-% Butylacrylat
und bezüglich des Polymeren
0,8 Gew.-% Laurylammoniumglykolat als Emulgator
versetzt. Dann wurden
415 g einer gesättigten Calciumhydroxidlösung als Fällungsmittel
und nach 4 min
4 g einer 10 gew.-%igen Lösung eines Copolymerisates aus
70 Gew.-% Acrylamid und
30 Gew.-% Diethylaminoethylacrylat als Flockungsmittel
zugegeben.

Der erhaltene Faserbrei wurde anschließend in einem Siebkasten (25 x 25 cm) bei leichtem Vakuum und unter Zuhilfenahme eines Stempels entwässert, wobei eine Rohplatte mit einer Restfeuchtigkeit von ca. 40 Gew.-% erhalten wurde. Diese wurde dann während 18 min im Mikrowellenofen getrocknet.

### Beispiel 2

Die Platte wurde analog zu Beispiel 1 hergestellt, jedoch wurden als Bindemittel
40 g einer 50 gew.-%igen Dispersion eines Polymeren aus
90 Gew.-% Methylmethacrylat,
10 Gew.-% Butylacrylat
und bezüglich des Polymeren
0,5 Gew.-% des Acetats eines Umsetzungsprodukts von 1 Mol Laurylamin mit 10 Mol Ethylenoxid als Emulgator
und als Fällungsmittel
39 g einer 2 gew.-%igen Lösung von Natriumtetraborat (Na₂B₄O₇)
verwendet.

### Beispiel 3

Die Platte wurde analog zu Beispiel 1 hergestellt, jedoch wurden als Bindemittel
30 g einer 55 gew.-%igen Dispersion eines Polymeren aus
95 Gew.-% Methylmethacrylat,
5 Gew.-% Ethylhexylacrylat
und bezüglich des Polymeren
1,2 Gew.-% Stearylammoniumhydrochlorid als Emulgator
und als Fällungsmittel
39 g einer 2 gew.-%igen Lösung von Natriumtetraborat (Na₂B₄O₇)
verwendet.

### Beispiel 4

Die Platte wurde analog zu Beispiel 1 hergestellt, jedoch wurden als Bindemittel
45 g einer 38 gew.-%igen Dispersion eines Polymeren aus
75 Gew.-% Methylmethacrylat,
25 Gew.-% Methylacrylat
und bezüglich des Polymeren
1,3 Gew.-% einer Mischung von Formiaten linearer
C₁₂-C₁₅-Alkylamine als Emulgator
und als Fällungsmittel
390 g einer gesättigen Calciumhydroxidlösung
verwendet.

### B. Prüfung der Leichtbauplatten

Zur Prüfung der erhaltenen Platten wurden aus diesen Prüflinge mit einer Länge von 25 cm und einer Breite von 5 cm geschliffen. Die Dicke der Prüflinge (1,5 cm) wurde mit einer Schieblehre gemessen. Nach dem Wiegen wurde ihre Dichte bestimmt.

Zur Bestimmung der Wasseraufnahme wurden die Prüflinge unter Wasser gelagert. Nach jeweils 1 Stunde und nach 2 Stunden wurden sie gewogen, und die Wasseraufnahme als prozentuales Verhältnis ihrer Gewichtszunahme zum Trockengewicht errechnet.

Zur Bestimmung der Formbeständigkeit wurden die Prüflinge an den Breitseiten aufgelegt, mit einem 1 Kg-Gewicht beschwert und so 14 Tage bei 38°C und einer relativen Luftfeuchtigkeit von 95 % gelagert. Anschließend wurde die Durchbiegung gemessen.

| Eigenschaften der Leichtbauplatten | | | | | |
|---|---|---|---|---|---|
| Beispiel Nr. | Glasübergangstemperatur des Polymeren T_{G} [°C] | Dichte der Platten [g/cm³] | Wasseraufnahme in Gew.-% nach | | Formbeständigkeit Durchbiegung [mm] |
| | | | 1h | 2h | |
| 1 | 82 | 0,32 | 8,9 | 12,4 | 0,5 |
| 2 | 94 | 0,30 | 11,0 | 14,7 | 0,0 |
| 3 | 97 | 0,29 | 10,2 | 15,0 | 1,0 |
| 4 | 85 | 0,34 | 7,1 | 13,8 | 0,0 |

## Patentansprüche

1. Leichtbauplatten auf der Basis von Mineralfasern A und thermoplastischen Bindemitteln, die bezüglich A einen Gehalt von
1 bis 25 Gew.-% eines Copolymeren B mit einer Glasübergangstemperatur von 70 bis 105°C, aufgebaut im wesentlichen aus
50 bis 98 Gew.-% Methylmethacrylat I,
2 bis 50 Gew.-% eines oder mehrerer Acrylsäureester II von C₁-C₈-Alkanolen und
0 bis 2,5 Gew.-% eines oder mehrerer vernetzender Monomere III
als Bindemittel,
0 bis 150 Gew.-% an Füllstoffen C,
und, bezogen auf B,
0,2 bis 15 Gew.-% eines oder mehrerer Amine F der allgemeinen Formel 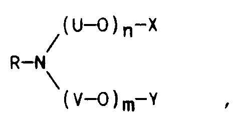 in der
R für C₈-C₁₈-Alkyl oder C₈-C₁₈-Alkenyl,
U und V für C₂-C₄-Alkylen,
X und Y für Wasserstoff, C₁-C₁₈-Alkyl oder C₂-C₁₈-Alkenyl und
n und m für ganze Zahlen von 0 bis 10 stehen,
oder deren Säureadditionssalze aufweisen.

2. Verfahren zur Herstellung von Leichtbauplatten gemäß Anspruch 1 durch Behandeln von Mineralfasern mit einem thermoplastischen Bindemittel, dadurch gekennzeichnet, daß man die Mineralfasern A und ggf. die Zusatzstoffe C, D und E mit einer wäßrigen, Säureadditionssalze der Alkylamine F enthaltenden Dispersion eines Copolymeren B und einem Fällungsmittel G suspendiert, die wäßrige Phase unter Blattbildung abtrennt und den Rückstand trocknet.

3. Verfahren nach Anspruch 2, dadurch gekennzeichnet, daß man als Fällungsmittel G Borax verwendet.

4. Verfahren nach Anspruch 2, dadurch gekennzeichnet, daß man als Fällungsmittel G Alkali- und Erdalkalihydroxide verwendet.

## Claims

1. A lightweight building board based on a mineral fiber A and a thermoplastic binder, containing, based on A,
from 1 to 25% by weight of a copolymer B having a glass transition temperature of from 70 to 105°C, composed essentially of
from 50 to 98% by weight of methyl methacrylate I,
from 2 to 50% by weight of one or more acrylic esters II of C₁-C₈-alkanols, and
from 0 to 2.5% by weight of one or more crosslinking monomers III as binder,
from 0 to 150% by weight of a filler C,
and, based on B,
from 0.2 to 15% by weight of one or more amines F of the formula 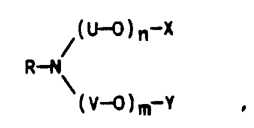 where
R is C₈-C₁₈-alkyl or C₈-C₁₈-alkenyl,
U and V are each C₂-C₄-alkylene,
X and Y are each hydrogen, C₁-C₁₈-alkyl or C₂-C₁₈-alkenyl, and
n and m are each an integer from 0 to 10,
or an acid addition salt thereof.

2. A process for producing a lightweight building board as claimed in claim 1 by treating a mineral fiber with a thermoplastic binder, which comprises suspending the mineral fiber A with or without additives C, D and E with an aqueous dispersion of a copolymer B containing an acid addition salt of an alkylamine F and with a precipitant G, separating off the aqueous phase with sheet formation, and drying the residue.

3. A process as claimed in claim 2, wherein the precipitant G is borax.

4. A process as claimed in claim 2, wherein the precipitant G is an alkali or alkaline earth metal hydroxide.

## Revendications

1. Plaques de construction légères à base de libres minérales A et de liants thermoplastiques, qui, par rapport à A, comportent
1 à 25% en poids d'un copolymère B d'une température de transition vitreuse de 70 à 105°C, essentiellement constitué de
50 à 98% en poids de méthacrylate de méthyle I,
2 à 50% en poids d'un ou plusieurs esters de l'acide acrylique II d'alcanolamines en C₁ à C₈ et 0 à 2,5% en poids d'un ou plusieurs monomères réticulants III,
à titre de liant,
0 à 150% en poids de charges C
et, par rapport à B,
0,2 à 15% en poids d'une ou plusieurs amines F de la formule générale 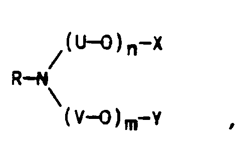 dans laquelle
R représente un radical alkyle en C₈ à C₁₈, ou un radical alcényle en C₈ à C₁₈,
U et V représentent des radicaux alkylène en C₂ à C₄,
X et Y représentent des atomes d'hydrogène, des radicaux alkyle en C₁ à C₁₈, ou des radicaux alcényle en C₂ à C₁₈ et
n et m représentent des nombres entiers de 0 à 10,
ou de leurs sels d'addition d'acides.

2. Procédé de fabrication de plaques de construction légères suivant la revendication 1, par le traitement de fibres minérales par un liant thermoplastique, caractérisé en ce que l'on met les fibres minérales A et éventuellement les additifs C, D et E en suspension avec une dispersion aqueuse, contenant des sels d'addition d'acides des alkylamines F, d'un copolymère B et d'un agent de précipitation G, on sépare la phase aqueuse sous formation d'une feuille et on sèche le résidu.

3. Procédé suivant la revendication 2, caractérisé en ce que l'on utilise du borax à titre d'agent de précipitation G.

4. Procédé suivant la revendication 2, caractérisé en ce que l'on utilise des hydroxydes de métaux alcalins et de métaux alcalino-terreux à titre d'agent de précipitation G.
